# EUROPEAN PATENT APPLICATION

(11) **EP 3 379 486 A1**
(43) Date of publication of application: **26.09.2018**
(21) Application number: 16866712.9
(22) Date of filing: 21.11.2016
(51) Int. Cl.: G06Q 50/10, G06Q 30/02, G06Q 30/06

(54) **SYSTEM AND METHOD FOR PROVIDING COOKING CONTENTS**

(30) Priority: 19.11.2015 KR 20150162309
(71) Applicant: An, Sang Mi, Seongnam-si, Gyeonggi-do 13525 (KR)
(72) Inventor: An, Sang Mi, Seongnam-si, Gyeonggi-do 13525 (KR)
(74) Representative: Gulde & Partner
(86) International application number: PCT/KR2016/013421
(87) International publication number: WO 2017/086760

(57) **Abstract**

Disclosed herein are a system and method for providing cooking content. The system for providing cooking content includes: a rent schedule management unit configured to receive cooking studio rental information from a renter, to receive a cooking studio rental application from a cooking expert, and to generate a rent schedule for a cooking studio based on the received rental information and rental application; an opening request reception unit configured to receive a cooking class opening request from the cooking expert; a content management unit configured to receive cooking content from the cooking expert; a class opening unit configured to open a cooking class based on the cooking class opening request, the rent schedule, and the cooking content; and a lecture information provision unit configured to provide the lecture information of the opened cooking class to an attendee.

## Description

### Technical Field

The present invention relates generally to a system and method for providing cooking content, and more specifically to a system and method for providing cooking content, which are capable of systematically performing the rent of a cooking studio, the opening of an online/offline cooking class, the taking of a cooking class, and the promotion and sales of a cooking-related product.

### Background Art

As the quality of life has improved recently, food is not simply a means for maintaining life, but is considered to have pleasure and hobby purposes. The cooking process of making food, as well as eating food, becomes another hobby, and thus the demand for the learning of profession cooking is rapidly increasing.

In connection with this, according to Korean Patent Application Publication No. 10-2006-0065981, there are disclosed a service apparatus and method for providing recipe content over a communication network. This technology proposes an apparatus and method for providing a recipe in the form of multimedia in real time by means of the screen and sound processing function of a mobile communication terminal, but is not sufficient to satisfy interest in or affection for cooking.

Meanwhile, the above-described background technology corresponds to technical information which has been possessed by the present inventor in order to contrive the present invention or which has been acquired in the process of contriving the present invention, and can not necessarily be regarded as a well-known technology which had been known to the public prior to the filing of the present invention.

### Disclosure

### Technical Problem

An object of an embodiment of the present invention is to propose a system and method for providing cooking content.

An object of an embodiment of the present invention is to propose a system and method for providing cooking content, which are capable of systematically performing the rent of a cooking studio, the opening of an online/offline cooking class, the taking of a cooking class, and the promotion and sales of a cooking-related product.

### Technical Solution

As a technical solution for accomplishing the above objects, according to a first aspect of the present invention, there is disclosed a system for providing cooking content, the system including: a rent schedule management unit configured to receive cooking studio rental information from a renter, to receive a cooking studio rental application from a cooking expert, and to generate a rent schedule for a cooking studio based on the received rental information and rental application; an opening request reception unit configured to receive a cooking class opening request from the cooking expert; a content management unit configured to receive cooking content from the cooking expert; a class opening unit configured to open a cooking class based on the cooking class opening request, the rent schedule, and the cooking content; and a lecture information provision unit configured to provide the lecture information of the opened cooking class to an attendee.

According to a second aspect of the present invention, there is disclosed a method for providing cooking content, which is performed by a system for providing cooking content, the method including: receiving a cooking class opening request; opening a cooking class based on the opening request; and providing the lecture information of the cooking class to an attendee.

According to a third aspect of the present invention, there is disclosed a computer-readable storage medium having stored thereon a program which performs a method for providing cooking content, the method including: receiving a cooking class opening request; opening a cooking class based on the opening request; and providing the lecture information of the cooking class to an attendee.

According to a fourth aspect of the present invention, there is disclosed a computer program which is executed by a system for providing cooking content and which is stored in a storage medium to perform a method for providing cooking content, the method including: receiving a cooking class opening request; opening a cooking class based on the opening request; and providing the lecture information of the cooking class to an attendee.

### Advantageous Effects

According to any one of the above-described technical solutions, an embodiment of the present invention can propose the system and method for providing cooking content.

Furthermore, according to any one of the above-described technical solutions, an embodiment of the present invention can propose the system and method for providing cooking content, which are capable of systematically performing the rent of a cooking studio, the opening of an online/offline cooking class, the taking of a cooking class, and the promotion and sales of a cooking-related product.

Moreover, according to any one of the above-described technical solutions, an embodiment of the present invention can propose the system and method for providing cooking content, in which the roles of the renter of a cooking studio, a cooking expert desiring to open an online/offline cooking class, an attendee desiring to take a cooking class, and a cooking-related businessman promoting and selling a cooking-related product are not fixed, but each of the users can perform all of the roles. In other words, each user can flexibly perform all of the roles in an embodiment of the present invention.

Accordingly, an embodiment of the present invention can provide the system and method which can freely share cooking-related resources, including resources required for cooking, resources required for a cooking class, cooking-related information, information about cooking-related products, etc.

The effects which can be acquired by the present invention are not limited to the above-described effects, and other effects which have not been described will be apparently understood by those having ordinary knowledge in the art, to which the present invention pertains, from the following description.

### Description of Drawings

FIG. 1 is a diagram schematically showing the configuration of a system for providing cooking content according to an embodiment of the present invention;
FIG. 2 is a diagram illustrating the configuration of a system for providing cooking content according to an embodiment of the present invention;
FIG. 3 is a block diagram schematically showing the configuration of a system for providing cooking content according to an embodiment of the present invention;
FIGS. 4 to 7 are flowcharts illustrating a method for providing cooking content according to an embodiment of the present invention; and
FIG. 8 is a diagram illustrating an example of the sequence of a method for providing cooking content according to an embodiment of the present invention.

### Mode for Invention

Embodiments of the present invention will be described in detail below with reference to the accompanying drawings so that those having ordinary knowledge in the art to which the present invention pertains can easily practice the present invention. However, the present invention may be implemented in various different forms, and are not limited to the embodiments described herein. Furthermore, in the drawings, portions unrelated to the following description will be omitted in order to clearly describe the present invention. Throughout the overall specification, like reference symbols will be assigned to like portions.

Throughout the overall specification, when a portion is described as being "connected" to another portion, this includes not only a case where they are "directly connected" to each other but also a case where they are "electrically connected" to each other with another component interposed therebetween. Furthermore, when a portion is described as "including" a component, this means that another component is not be excluded from the portion but may be included in the portion, unless particularly described to the contrary.

The present invention will be described in detail with reference to the accompanying drawings.

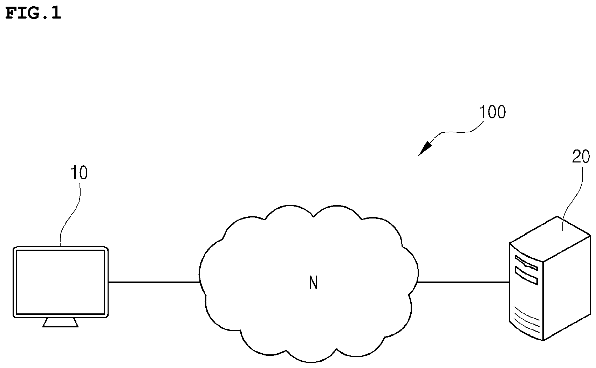

FIG. 1 is a diagram schematically showing the configuration of a system 100 for providing cooking content according to an embodiment of the present invention.

The system 100 for providing cooking content according to the embodiment of the present invention is a system for performing a method for providing cooking content, the method including generating a rent schedule for a cooking studio, receiving cooking content, opening an online/offline cooking class, etc. Referring to FIG. 1, the system 100 for providing cooking content may include a user terminal 10 and a cooking content provision server 20.

In this case, respective components included in the system 100 for providing cooking content may communicate over a network N. In this case, the network N may be implemented as one or more of all types of wired/wireless networks, such as a Local Area Network (LAN), a Wide Area Network (WAN), a Value Added Network (VAN), a Personal Area Network (PAN), a mobile radio communication network, the Wireless Broadband (Wibro) Internet, a Mobile Worldwide Interoperability for Microwave Access (mobile WiMAX) network, a High Speed Downlink Packet Access (HSDPA) network, a satellite communication network, etc. In this case, the system 100 for providing cooking content may be implemented as a server-client system. For this purpose, the system 100 for providing cooking content may include the user terminal 10 equipped with a client configured for interaction with a user.

Furthermore, the system 100 for providing cooking content may be, for example, a web server (or mobile web server) capable of providing web service to the user terminal 10 or another server. Alternatively, the system 100 for providing cooking content may be, for example, one of the server systems of various web content providers, such as a portal site server, etc. Alternatively, the system 100 for providing cooking content may be implemented as a group of server systems including a web server, a load balancing server, a database server, etc.

Alternatively, the system 100 for providing cooking content may be implemented as the user terminal 10 equipped with an application configured for the provision of cooking content, or may be implemented as a server-client system. When the system 100 for providing cooking content is implemented as a server-client system, the system 100 for providing cooking content may include the user terminal 10 equipped with a client configured for interaction with a user.

In this case, the user terminal 10 may be implemented as, for example, a computer, a portable terminal, a television, or a wearable device which can access a remote server or can be connected to another terminal and a server over the network N. In this case, the computer includes, for example, a notebook, a desktop, and a laptop each equipped with a web browser. The portable terminal is, for example, a wireless communication device capable of guaranteeing portability and mobility, and may include all types of handheld wireless communication devices, such as a Personal Communication System (PCS) terminal, a Personal Digital Cellular (PDC) terminal, a Personal Handyphone System (PHS) terminal, a Personal Digital Assistant (PDA), a Global System for Mobile communications (GSM) terminal, an International Mobile Telecommunication (IMT)-2000 terminal, a Code Division Multiple Access (CDMA)-2000 terminal, a W-Code Division Multiple Access (W-CDMA) terminal, a Wireless Broadband (Wibro) Internet terminal, a smartphone, a Mobile Worldwide Interoperability for Microwave Access (mobile WiMAX) terminal, etc. Furthermore, the television may include an Internet Protocol Television (IPTV), an Internet Television (Internet TV), a terrestrial TV, a cable TV, etc. Moreover, the wearable device is an information processing device of a type which can be directly worn on a human body, such as a watch, glasses, an accessory, clothing, shoes, or the like, and can access a remote server or be connected to another terminal directly or via another information processing device over a network.

Furthermore, the user terminal 10 may be implemented on an electronic terminal including an interface (for example, a display screen, a keyboard or mouse, a touch display, or the like) which enables a user to interact.

The user terminal 10 may be classified as a renter's terminal 11, a cooking expert's terminal 12, an attendee's terminal 13, or a cooking-related businessman's terminal 14 according to the role thereof.

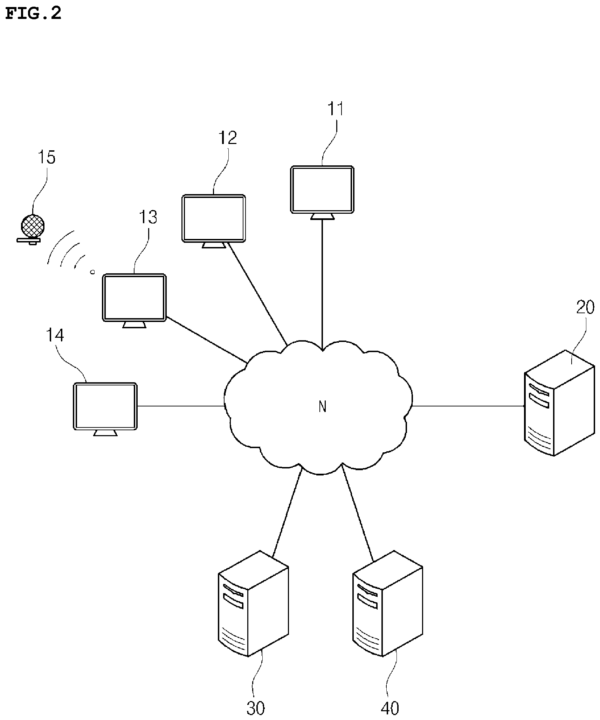

In connection with this, referring to FIG. 2, the cooking content provision server 20 is specifically shown as being able to communicate with one or more user terminals 11, 12, 13, or 14, such as that shown above. Furthermore, the cooking content provision server 20 may perform a method for providing cooking content while communicating with other servers 30 and 40.

In other words, in order to share cooking-related resources, such as the rent of a cooking studio, the opening of a cooking class, the taking of a cooking class, and information about cooking products, the system 100 for providing cooking content may communicate with the renter's terminal 11 configured to rent a cooking studio where a cooking class can be given or cooking practice can be performed, the cooking expert's terminal 12 configured to rent a cooking studio and open a cooking class or to provide cooking content, the attendee's terminal 13 configured to rent a cooking studio and practice cooking or to take a cooking class, and the cooking-related businessman's terminal 14 configured to promote and sell cooking products, i.e., cooking-related products, such as cooking materials or kitchen utensils. In this case, the attendee's terminal 13 may include an interaction device 15 configured for interaction with an attendee, or may communicate with the interaction device 15. This will be specifically described in a related part later.

Furthermore, the cooking content provision server 20 may communicate with a product sales server 30 configured for the sales of cooking products, or may communicate with a funding management system 40 configured to raise a fund required to open a cooking class.

However, in an embodiment of the present invention, each user is not limited to a fixed role, but may perform all roles in the embodiment of the present invention. Accordingly, each of the user terminals 11, 12, 13 and 14 or each user may flexibly perform all the roles of the embodiment of the present invention. In other words, each user becomes a renter when playing the role of renting a cooking studio, becomes a cooking expert when opening a cooking class, becomes an attendee when taking a cooking class, and becomes a cooking-related businessman when promoting and selling cooking-related products. Therefore, in an embodiment of the present invention, the role of each user called a renter, a cooking expert, an attendee, or a cooking-related businessman is designated for ease of description, but is not fixed.

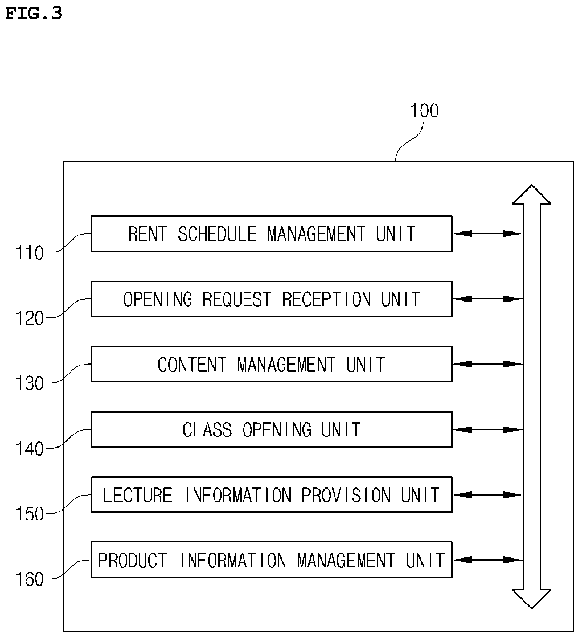

Meanwhile, referring to FIG. 3, there is shown a block diagram showing the individual components of a system 100 for providing cooking content according to an embodiment of the present invention.

Referring to FIG. 3, the system 100 for providing cooking content may include a rent schedule management unit 110, an opening request reception unit 120, a content management unit 130, a class opening unit 140, a lecture information provision unit 150, and a product information management unit 160.

First, the rent schedule management unit 110 may receive cooking studio rental information from a renter. In this case, the cooking studio rental information may include at least one of information about the location of a cooking studio, information about equipment and tools provided in the cooking studio, information about a rental fee, and information about rentable time for the cooking studio. The information about equipment and tools provided in the cooking studio may include information about the types and numbers of equipment and tools provided in the cooking studio.

In an embodiment of the present invention, the identification information of the equipment and the tools provided in the cooking studio may be included in the rental information which is received by the rent schedule management unit 110. For this purpose, an identification tag may be included in each of the equipment and the tools provided in the cooking studio cooking studio. In this case, the identification tag may include an image code, such as a barcode, a QR code, or the like, a three-dimensional code, an NFC tag, or an RFID tag. Furthermore, the rent schedule management unit 110 may include an identification device configured to acquire the identification information of identification tags included in the equipment and the tools, may communicate with the identification device, and may receive identification information from the user terminal 10 in communication with the identification device.

In other words, the rent schedule management unit 110 may receive the identification information of the equipment and the tools provided in the cooking studio, thereby generating information about the presence and management state of the equipment and the tools and also managing the equipment and the tools. For example, the rent schedule management unit 110 may generate information about how many ladles are provided in the cooking studio, information about whether there is a missing one among the provided ladles, and information about a user who has used a missing ladle based on identification information when the ladle is missing by receiving the identification information and comparing the identification information with previously received and stored identification information, and may provide the information. As described above, the rent schedule management unit 110 automates the management of the equipment and the tools provided in the cooking studio, there enabling a rental application, to be described later, to be made easy.

Additionally, the rent schedule management unit 110 may receive the ID of the cooking studio corresponding to the received rental information from a renter or generate the ID of the cooking studio, and may store the ID of the cooking studio and the rental information corresponding to the ID in association with each other. In this case, the ID of the cooking studio is information adapted for the identification of the cooking studio, and may include the name, identification number or the like of the cooking studio. Furthermore, the rent schedule management unit 110 may match the received cooking studio rental information and the ID corresponding to the rental information, and may provide the rental information and the ID, matched to each other, to another user, such as a cooking expert desiring to rent the cooking studio, or the like.

Furthermore, the rent schedule management unit 110 may receive a cooking studio rental application from the cooking expert. In this case, the cooking studio rental application may be performed based on the rental information. The rental application may include rental conditions, i.e., conditions for the rent of the cooking studio, and rental applicant information, i.e., information about a person requesting rent. For example, when the rent schedule management unit 110 provides an interface configured for the entry of rental information and rental conditions to the cooking expert, the cooking expert may select or enter rental conditions, such as the ID and location of the cooking studio, provided equipment and tools, the time for rent, etc., via the interface. Furthermore, the rent schedule management unit 110 provides an interface configured for the entry of rental applicant information, such as an ID adapted to identify a person desiring rent, for example, the name, alias, identification code, or the like of the cooking expert, and then the cooking expert may enter his or her rental applicant information.

Furthermore, the rent schedule management unit 110 may compare the rental information with the rental application, may perform processing such that rent has been completed when the rental information meets the rental conditions included in the rental application, and may generate a rent schedule by incorporating the processing thereinto.

In other words, the rent schedule management unit 110 may generate a rent schedule for the cooking studio based on the received rental information and the rental application. In this case, the rent schedule may include rentable date or time information or non-rentable date or time information for the cooking studio, and the non-rentable date may include a rent completion date. The rent schedule reception unit may provide a rent schedule for each date or each cooking studio. Furthermore, the rent schedule management unit 110 may change and provide a previously generated rent schedule whenever rental information and a rental application are received.

Meanwhile, the opening request reception unit 120 may receive a cooking class opening request from the cooking expert. The cooking class opening request may include information about whether a cooking class is provided online or offline, about the genre of cooking handled in the cooking class, about cooking materials, about the number of attendees to be admitted, about supplies, about a class fee, etc. Additionally, the content management unit 130 may receive cooking content from the cooking expert. In this case, the cooking content may include a moving image in which a cooking process of a cooking expert has been imaged or text and photos which illustrate the cooking process in detail. Furthermore, the cooking content may include information about the ID of the cooking expert appearing in or having created the cooking content and the name, genre, cooking materials, supplies, etc. of a dish included in the cooking content, i.e., cooking content identification information.

In this case, the class opening unit 140 may open a cooking class based on the above-described cooking class opening request, rent schedule, and cooking content. For example, the class opening unit 140 may extract information about the ID of the cooking expert who has requested rent, the location of the cooking studio the rent of which has been requested, rental time, etc. from the rent schedule, may extract information about the genre of the dish, the cooking materials, the number of attendees to be admitted, the supplies, the class fee, etc. from the cooking class opening request, and may then open an offline cooking class corresponding to the extracted information. Furthermore, the class opening unit 140 may open an online cooking class which provides cooking content based on the received cooking content.

Additionally, the class opening unit 140 may receive a cooking class opening request, including cooking class opening condition information, from at least one of the administrator of the system 100 for providing cooking content, the cooking expert, and the attendee. In this case, a cooking class opening condition refers to a condition required to be met in order to open a cooking class. For example, the cooking class opening condition may include a participant number condition, i.e., information about the minimum number of attendees required for the opening of the cooking class, or a funding condition, i.e., information about a fund required for the opening of the cooking class.

In connection with this, the class opening unit 140 may publicize cooking class opening request information including participant number condition information, and may recruit attendees. Furthermore, the class opening unit 140 may receive an intention to participate from an attendee desiring to participate in the cooking class. In this case, when intentions to participate have been received from a number of attendees equal to or larger than the participant number condition, the class opening unit 140 may open the cooking class corresponding to the opening request.

Furthermore, the class opening unit 140 may publicize cooking class opening request information including funding condition information. In this case, the raising of a fund may be performed via the funding management system 40. The funding management system 40 configured for the raising of a fund may generate information about a raised fund, and may transmit the information about a raised fund to the class opening unit 140. The class opening unit 140 having received the fund information may open a cooking class corresponding to the class opening request when it is determined that the raised fund meets the funding condition. Although the funding management system 40 may be included in the system 100 for providing cooking content, it may be operated as a separate system.

Furthermore, the lecture information provision unit 150 may provide the lecture information of the opened cooking class to users including the renter, the cooking expert, and the attendees.

In this case, the lecture information may include information included in the cooking class opening request, the rent schedule, and the cooking content, e.g., information about the ID of the cooking expert, the location of the cooking studio, the genre of cooking handled in the cooking class, the cooking materials, and the tools and the equipment used for the cooking. The lecture information provision unit 150 may provide search filters for respective items, included in the lecture information, to each of the attendees. In other words, the lecture information provision unit 150 may receive search request information based on the search filters from the attendee, and may provide lecture information corresponding to the received search request information. The attendee may register for the cooking class based on the provided lecture information. The lecture information provision unit 150 may provide cooking content based on the registration for the cooking class.

Furthermore, according to an embodiment of the present invention, the lecture information provision unit 150 may receive the voice information of each attendee from the interaction device 15 configured for the acquisition of the voice information of an attendee, and may provide lecture information corresponding to the received voice information. In this case, the interaction device 15 may be attached to a location at which the voice information of the attendee can be acquired while the attendee is performing cooking, e.g., an apron which is worn by the attendee. Furthermore, although the interaction device 15 may include an output device, such as a display panel, a speaker, or the like, it may perform an embodiment of the present invention through communication with a separate terminal including an output device, for example, the attendee's terminal 13.

More specifically, the lecture information provision unit 150 may receive the voice information of the attendee from the interaction device 15, may analyze the received voice information, and may then extract search request information corresponding to the search filters. Additionally, the lecture information provision unit 150 may provide lecture information corresponding to the extracted search request information, in which case the lecture information may include cooking content.

For example, when an attendee wearing an apron to which the interaction device 15 has been attached says "show me Instructor Sang-mi Ahn's way to make fresh cream cake" in order to perform braking, the interaction device 15 acquires the voice information of the attendee, and transmits the voice information to the lecture information provision unit 150. The lecture information provision unit 150 may extract "Sang-mi Ahn" and "fresh cream cake," i.e., voice information corresponding to the search filters, by analyzing the voice information of the attendee, and may provide a "Cooking Expert Sang-mi Ahn's fresh cream cake recipe," i.e., cooking content corresponding to the voice information, in the form of a moving image, sound, text, and/or the like. Furthermore, when the attendee using the "Cooking Expert Sang-mi Ahn's fresh cream cake recipe" says "show me a Ji-eun Yang's fresh cream recipe" while kneading dough, the lecture information provision unit 150 having acquired the voice information of the attendee from the interaction device 15 may provide a "Ji-eun Yang's fresh cream recipe," i.e., cooking content. In this case, the cooking content may be provided via the attendee's terminal 13 in communication with the interaction device 15.

Furthermore, the system 100 for providing cooking content may further include the product information management unit 160. The product information management unit 160 receives cooking product information, i.e., information about cooking-related products, such as cooking materials, kitchen utensils, etc. used for cooking, from a cooking-related businessman, and may provide the received cooking product information to another user.

For example, the product information management unit 160 may extract lecture information related to the cooking class of the attendee based on the registration information of the participating attendee, and may provide cooking product information related to cooking materials or kitchen utensils used in the cooking class based on the extracted lecture information. Alternatively, when the lecture information is provided to the attendee, cooking product information corresponding to the provided lecture information is also provided, thereby enabling the attendee to determine items which will be newly purchased to participate in the cooking class. By doing so, the attendee may be guided through convenient and natural purchase.

Additionally, the users, such as the attendees, etc., provided with the cooking product information may make a cooking product purchase request based on the cooking product information. In this case, the product information management unit 160 may receive the cooking product purchase request based on the cooking product information, and may provide the cooking product purchase request to the cooking-related businessmen. In other words, the product information management unit 160 may mediate the promotion and sales of the cooking products. Furthermore, the product information management unit 160 may transmit the cooking product purchase request through communication with the product sales server 30. In this case, the system 100 for providing cooking content includes the product sales server 30, thereby mediating the sales of the cooking product by directly performing the sales of the cooking products or transmitting the cooking product purchase request to the product sales server 30 which is separately operated.

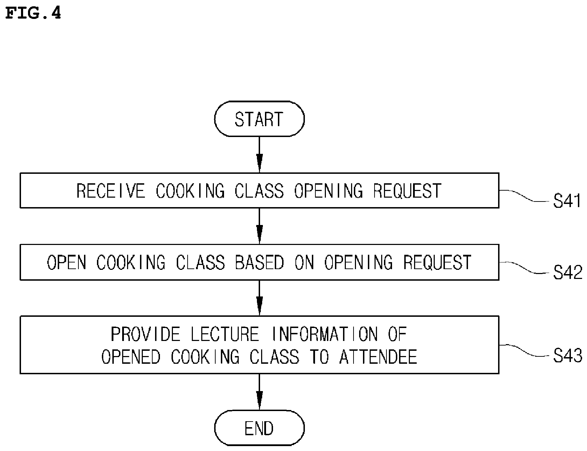

Next, a method for providing cooking content according to an embodiment of the present invention will be described with reference to FIGS. 4 to 8. FIGS. 4 to 8 are flowcharts illustrating the method for providing cooking content according to the embodiment of the present invention.

The method for providing cooking content to be described later includes steps time sequentially processed in the system 100 for providing cooking content, which are shown in FIGS. 1 to 3. Accordingly, the items which are omitted below but have been described above in conjunction with the system shown in FIGS. 1 to 3 may be also applied to the method for providing cooking content to be described later.

First, according to the embodiment of the present invention shown in FIG. 4, the system 100 for providing cooking content may include receiving a cooking class opening request at step S41, and opening a cooking class based on the received opening request at step S42.

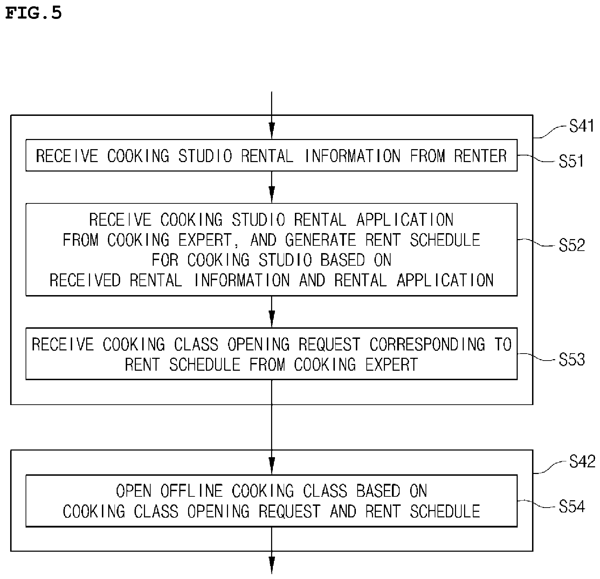

In connection with this, referring to FIG. 5, the system 100 for providing cooking content may receive cooking studio rental information from a renter in order to open a cooking class at step S51. The cooking studio rental information may include at least one of information about provided equipment and tools, information about the location of a cooking studio, and information about rentable time for the cooking studio, as described above.

Furthermore, the system 100 for providing cooking content may receive a cooking studio rental application from a cooking expert and generate a rent schedule for the cooking studio based on rental information and the rental application at step S52, and may receive a cooking class opening request corresponding to the generated rent schedule from the cooking expert at step S53. In this case, the system 100 for providing cooking content may open an offline cooking class based on the cooking class opening request and the rent schedule at step S54.

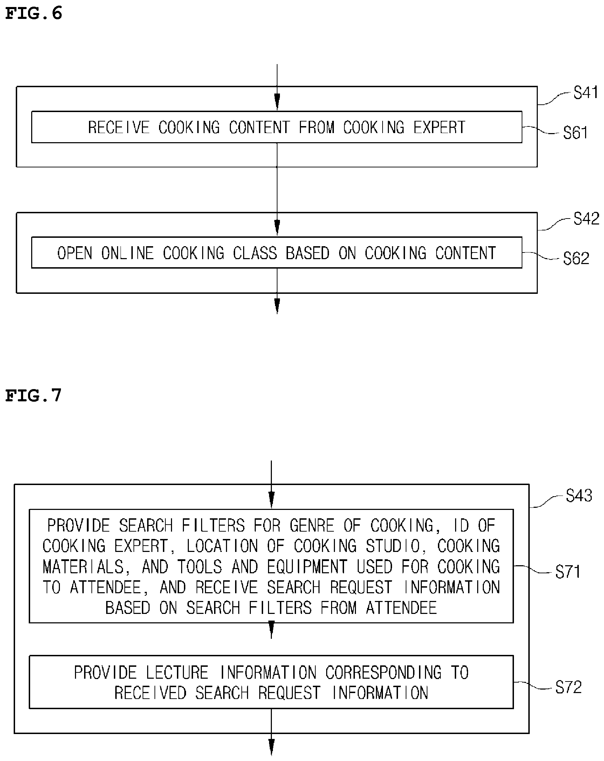

Meanwhile, referring to FIG. 6, there is shown another embodiment including receiving the cooking class opening request at step S41 and opening a cooking class at step S42. For example, the system 100 for providing cooking content may receive cooking content from a cooking expert at step S61, and may open an online cooking class based on the received cooking content at step S62.

In other words, the system 100 for providing cooking content according to the embodiment of the present invention provides a platform in which the rent of a cooking studio where a cooking class can be given or cooking practice can be performed is mediated and a cooking expert can open an offline or online cooking class and share the knowledge of cooking.

Furthermore, the system 100 for providing cooking content may provide lecture information regarding the opened cooking class to an attendee at step S43.

In connection with this, referring to FIG. 7, the system 100 for providing cooking content may provide search filters for the genre of cooking, the ID of the cooking expert, the location of the cooking studio, cooking materials, and tools and equipment used for cooking to the attendee and may receive search request information based on the search filters from the attendee at step S71. Furthermore, the system 100 for providing cooking content may provide lecture information corresponding to the search request information to the attendee at step S72.

Meanwhile, the system 100 for providing cooking content may receive cooking product information from cooking-related businessmen, and may provide the received cooking product information. In other words, users including the renter, the cooking expert, the attendee, etc. may provide information about cooking products, such as cooking materials, kitchen utensils, etc., i.e., cooking-related products. Furthermore, the system 100 for providing cooking content may receive a cooking product purchase request based on the cooking product information, and may provide the received cooking product purchase request to the cooking-related businessmen.

By doing so, the system 100 for providing cooking content performs a method for providing cooking content, which provides and shares overall cooking content, including the rent of a cooking studio where a cooking class can be given or cooking practice can be performed, the opening of an online/offline cooking class, the provision of cooking class information, the recruitment of cooking class attendees, the provision of the information of cooking products, and the sales of the cooking products.

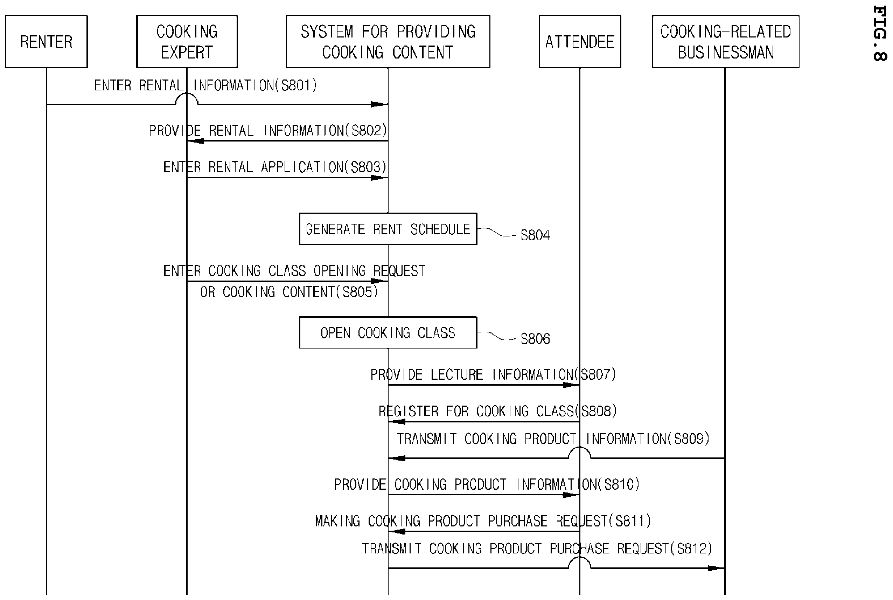

Next, an embodiment of the method for providing cooking content will be described with reference to FIG. 8. First, a renter may enter rental information into the system 100 for providing cooking content at step S801. The system 100 for providing cooking content may provide the entered rental information to a cooking expert at step S802, and the cooking expert may enter a rental application based on the provided rental information at step S803. In this case, the system 100 for providing cooking content may generate a rent schedule based on the rental information and the rental application at step S804.

Furthermore, the cooking expert may enter a cooking class opening request or cooking content at step S805. The system 100 for providing cooking content may open a cooking class based on the cooking class opening request, the rent schedule, and the cooking content at step S806, and may provide the lecture information of the cooking class to an attendee at step S807. The attendee may register for the cooking class based on the provided lecture information at step S808.

Furthermore, cooking-related businessmen may transmit cooking product information to the system 100 for providing cooking content at step S809. The system 100 for providing cooking content may provide the cooking product information to the attendee at step S810. In this case, the system 100 for providing cooking content may select and provide cooking product information related to the cooking class in which the attendee participates based on the registration of the attendee for the cooking class. The attendee provided with the cooking product information may make a cooking product purchase request to the system 100 for providing cooking content at step S811, and the system 100 for providing cooking content may mediate the promotion and sales of the cooking-related products by transferring the received cooking product purchase request to the cooking-related businessmen at step S812.

The term "unit" used herein means software or a hardware component such as a field-programmable gate array (FPGA) or application-specific integrated circuit (ASIC), and a "unit" performs a specific role. However, a "unit" is not limited to software or hardware. A "unit" may be configured to be present in an addressable storage medium, and also may be configured to run one or more processors. Accordingly, as an example, a "unit" includes components, such as software components, object-oriented software components, class components and task components, processes, functions, attributes, procedures, subroutines, segments in program code, drivers, firmware, microcode, circuits, data, a database, data structures, tables, arrays, and variables.

Components and a function provided in "unit(s)" may be coupled to a smaller number of components and "unit(s)" or divided into a larger number of components and "unit(s)."

In addition, components and "unit(s)" may be implemented to run one or more CPUs in a device or secure multimedia card.

Furthermore, a method for providing cooking content according to an embodiment of the present invention may be implemented as a computer program (or a computer program product) including computer-executable instructions. The computer program includes programmable machine instructions which are processed by a processor, and may be implemented in a high-level programming language, an object-oriented programming language, an assembly language, a machine language, or the like. Furthermore, the computer program may be stored in a tangible computer computer-readable storage medium (for example, memory, a hard disk, a magnetic/optical medium, a solid-state drive (SSD), or the like).

Accordingly, a method for providing cooking content according to an embodiment of the present invention may be implemented in such a manner that the above-described computer program is executed by a computing apparatus. The computing apparatus may include at least some of a processor, memory, a storage device, a high-speed interface connected to memory and a high-speed expansion port, and a low-speed interface connected to a low-speed bus and a storage device. These individual components are connected using various buses, and may be mounted on a common motherboard or using another appropriate method.

In this case, the processor may process instructions within a computing apparatus. An example of the instructions is instructions which are stored in memory or a storage device in order to display graphic information for providing a Graphic User Interface (GUI) onto an external input/output device, such as a display connected to a high-speed interface. As another embodiment, a plurality of processors and/or a plurality of buses may be appropriately used along with a plurality of pieces of memory. Furthermore, the processor may be implemented as a chipset composed of chips including a plurality of independent analog and/or digital processors.

Furthermore, the memory stores information within the computing device. As an example, the memory may include a volatile memory unit or a set of the volatile memory units. As another example, the memory may include a non-volatile memory unit or a set of the non-volatile memory units. Furthermore, the memory may be another type of computer-readable medium, such as a magnetic or optical disk.

Additionally, the storage device may provide a large storage space to the computing device. The storage device may be a computer-readable medium, or may be a configuration including such a computer-readable medium. For example, the storage device may also include devices within a storage area network (SAN) or other elements, and may be a floppy disk device, a hard disk device, an optical disk device, a tape device, flash memory, or a similar semiconductor memory device or array.

The above-described detailed description is intended merely to illustrate the present invention. It will be understood that those having ordinary knowledge in the art to which the present invention pertains can easily make modifications and variations without changing the technical spirit and essential features of the present invention. Therefore, the above-described embodiments are illustrative and are not limitative in all aspects. For example, each component described as being in a single form may be practiced in a distributed form. In the same manner, components described as being in a distributed form may be practiced in an integrated form.

The scope of the present invention should be defined by the attached claims, rather than the detailed description. Furthermore, all modifications and variations which can be derived from the meanings, scope and equivalents of the claims should be construed as falling within the scope of the present invention.

## Claims

1. A system for providing cooking content, the system comprising:
a rent schedule management unit configured to receive cooking studio rental information from a renter, to receive a cooking studio rental application from a cooking expert, and to generate a rent schedule for a cooking studio based on the received rental information and rental application;
an opening request reception unit configured to receive a cooking class opening request from the cooking expert;
a content management unit configured to receive cooking content from the cooking expert;
a class opening unit configured to open a cooking class based on the cooking class opening request, the rent schedule, and the cooking content; and
a lecture information provision unit configured to provide lecture information of the opened cooking class to an attendee.

2. The system of claim 1, wherein the rent schedule management unit receives cooking studio rental information, including at least one of information about a location of the cooking studio, information about equipment and tools provided in the cooking studio, information about a rental fee, and information about rentable time for the cooking studio.

3. The system of claim 1, wherein the lecture information provision unit provides search filters for an ID of the cooking expert, a location of the cooking studio, a genre of cooking, cooking materials, and tools and equipment used for the cooking to the attendee, receives search request information based on the search filters from the attendee, and provides lecture information corresponding to the received search request information.

4. The system of claim 3, wherein the lecture information provision unit receives voice information of the attendee from an interaction device interacting with the attendee, extracts search request information corresponding to the search filters from the received voice information, and provides lecture information corresponding to the extracted search request information.

5. The system of claim 4, wherein the interaction device is attached to an apron which is worn by the attendee.

6. The system of claim 1, further comprising a product information management unit configured to receive cooking product information from a cooking-related businessman and to provide the received cooking product information.

7. The system of claim 6, wherein the product information management unit receives a cooking product purchase request based on the cooking product information, and provides the received cooking product purchase request to the cooking-related businessman.

8. The system of claim 1, wherein the class opening unit receives a cooking class opening request including cooking class opening condition information from at least one of an administrator of the system for providing cooking content, the cooking expert, and the attendee.

9. The system of claim 8, wherein:
the cooking class opening condition information includes participant number condition information required for the opening of the cooking class; and
the class opening unit opens a cooking class corresponding to the opening request when intentions to participate have been received from a number of attendees equal to or larger than the participant number condition.

10. The system of claim 8, wherein:
the cooking class opening condition information includes funding condition information required for the opening of the cooking class; and
the class opening unit raises a fund, receives fund information corresponding to the opening request from a funding management system configured for generation of information about the raised fund, and opens a cooking class corresponding to the opening request when a fund meeting the funding condition has been raised.

11. A method for providing cooking content, the method being performed by a system for providing cooking content, the method comprising:
receiving a cooking class opening request;
opening a cooking class based on the opening request; and
providing lecture information of the cooking class to an attendee.

12. The method of claim 11, wherein receiving the cooking class opening request comprises:
receiving cooking studio rental information from a renter;
receiving a cooking studio rental application from a cooking expert, and generating a rent schedule for a cooking studio based on the received rental information and rental application; and
receiving a cooking class opening request corresponding to the rent schedule from the cooking expert;
wherein opening the cooking class comprises opening an offline cooking class based on the cooking class opening request and the rent schedule.

13. The method of claim 11, wherein:
receiving the cooking class opening request comprises receiving cooking content from a cooking expert; and
opening the cooking class comprises opening an online cooking class based on the cooking content.

14. The method of claim 12, wherein receiving the rental information comprises receiving cooking studio rental information including at least one of information about equipment and tools provided in the cooking studio, information about a location of the cooking studio, and information about rentable time for the cooking studio.

15. The method of claim 11, wherein providing the lecture information to the attendee comprises:
providing search filters for a genre of cooking, an ID of the cooking expert, a location of the cooking studio, cooking materials, and tools and equipment used for the cooking to the attendee, and receiving search request information based on the search filters from the attendee; and
providing lecture information corresponding to the received search request information.

16. The method of claim 11, further comprising:
receiving cooking product information from a cooking-related businessman, and providing the received cooking product information; and
receiving a cooking product purchase request based on the cooking product information, and providing the received cooking product purchase request to the cooking-related businessman.

17. A computer-readable storage medium having stored thereon a program which performs the method set forth in claim 11.

18. A computer program which is executed by a system for providing cooking content and which is stored in a storage medium to perform the method set forth in claim 11.
